(19) Europäisches Patentamt
European Patent Office
Office européen des brevets

(11) **EP 2 715 430 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(21) Anmeldenummer: **12718097.4**

(22) Anmeldetag: **28.03.2012**

(51) Int Cl.:
***G02B 21/14*** *(2006.01)*

(86) Internationale Anmeldenummer:
**PCT/EP2012/055532**

(87) Internationale Veröffentlichungsnummer:
**WO 2012/163566 (06.12.2012 Gazette 2012/49)**

(54) **ANORDNUNG ZUR ERZEUGUNG EINES DIFFERENTIALINTERFERENZKONTRASTBILDES**

ARRANGEMENT FOR GENERATING A DIFFERENTIAL INTERFERENCE CONTRAST IMAGE

ENSEMBLE SERVANT À PRODUIRE UNE IMAGE À CONTRASTE INTERFÉRENTIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2011 DE 102011050674**

(43) Veröffentlichungstag der Anmeldung:
**09.04.2014 Patentblatt 2014/15**

(73) Patentinhaber: **Hseb Dresden GmbH**
**01099 Dresden (DE)**

(72) Erfinder: **SCHMIDT, Christine**
**10557 Berlin (DE)**

(74) Vertreter: **Weisse, Renate**
**Patentanwälte Weisse & Wolgast**
**Bleibtreustrasse 38**
**10623 Berlin (DE)**

(56) Entgegenhaltungen:
**WO-A2-02/057832     US-A- 4 062 619**
**US-A- 5 751 475**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die Erfindung betrifft eine Anordnung zur Erzeugung eines Differentialinterferenzkontrastbildes (DIC) eines Objekts in einer Bildebene, enthaltend:

  (a) eine Strahlungsquelle;
  (b) eine Köhlersche Beleuchtungoptik zur Beleuchtung des Objekts mit Licht aus der Strahlungsquelle;
  (c) ein Objektiv zur Abbildung der Objektebene in eine Bildebene, wobei das Objektiv eine Austrittspupille und eine Eintrittspupille aufweist, und wobei die Eintrittspupille des Objektivs in der Beleuchtungspupille der Köhlerschen Beleuchtungsoptik liegt; und
  (d) ein Bauelement zur Erzeugung einer Interferenz oder optische Filterung mit den Merkmalen des Oberbegriffs des Anspruchs 1.

Die Differentialinterferenzkontrastmikroskopie (DIC) ist ein Polarisationskontrastverfahren, mit welchem Phasenobjekte mit plastischem Eindruck dargestellt werden können. Phasenobjekte sind Objekte, in denen Phasenunterschiede im Strahlengang erzeugt werden. Bei der DIC-Mikroskopie wird das Objekt mit einer Köhlerschen Beleuchtungsanordnung beleuchtet. Zur Erzeugung von polarisiertem Licht wird ein Polarisationsfilter, der Polarisator, hinter der Strahlungsquelle eingesetzt. Vor dem Detektor wird ein weiterer Polarisationsfilter, der Analysator angeordnet. Im Beleuchtungsstrahlengang optisch nach dem Polarisator wird bei der DIC-Mikroskopie ein doppelbrechendes Prisma, das sogenannte Nomarski-Prisma, vorgesehen. Ein weiteres, gleichartiges, doppelbrechendes Prisma wird optisch vor dem Analysator eingesetzt. Die verwendeten Nomarski-Prismen sind baugleich. Sie bestehen aus doppelbrechenden Kristallen. Das polarisierte Strahlenbündel wird im Nomarski-Prisma in zwei Teilstrahlen unterschiedlicher Phase und Polarisationsrichtung aufgespaltet.

Mit der Anordnung werden zwei senkrecht zueinander polarisierte Strahlengänge erzeugt. Die Strahlengänge sind amplitudengleich. Sie können nach deren Zusammenführung miteinander interferieren. Phasenobjekte, in denen die beiden Strahlengänge eine unterschiedliche optische Weglänge, z.B. durch unterschiedliche Dicken oder unterschiedliche Brechungsindizes, haben, bewirken einen zusätzlichen Phasenversatz. Dieser ist in der Bildebene hinter dem Analysator als Helligkeitsunterschied zu erkennen.

**Stand der Technik**

Aus dem Internet bei http://www.olympusmicro.com/primer/ techniques/dic/dicintro.html "Fundamental Concepts in DIC Microscopy" und http://www.olympusmicro.com/primer/java/dic/wollastonwavefronts/index.html "Wavefront Shear in Wollaston and Nomarski Prisms" und R.Danz, et al. "PlasDIC - a useful modification of the differential interference contrast" in Photonic, Vol. 36, 1 (2004), S.42-45 ist eine Anordnung für die DIC-Mikroskopie bekannt. Bei der Anordnung müssen sowohl Polarisator und Analysator, als auch die zugeordneten Nomarski-Prismen geeignet zueinander orientiert sein. Für Mikroskopobjektive unterschiedlicher Vergrößerung werden angepasste Nomarski-Prismen benötigt. Es ist bekannt, die Nomarski-Prismen lateral zur Mikroskopachse zu verschieben oder um die Mikroskopachse zu drehen.

In der Auflichtmikroskopie kann der Differentialinterferenzkontrast mit einem einzelnen Nomarski-Prisma im gemeinsamen Teil des Beleuchtungs- und Abbildungsstrahlengangs erreicht werden. Für die Durchlichtmikroskopie ist ein Prismenpaar erforderlich.

Die erforderlichen optischen und mechanischen Bauteile sind relativ teuer. Die Ausrichtung und Synchronisierung im Mikroskop und die Montage sind aufwändig.

Die Intensitätsverteilung des Bildes ist proportional zu den Amplituden- und Phaseneigenschaften des Objekts. Diese Proportionalität hängt vom gegenseitigen Versatz der Bilder der beiden Strahlengänge und dessen Richtung ab. Die Proportionalität hängt ferner von der Wechselwirkung der beiden unterschiedlich polarisierten Beleuchtungsanteile mit der Spannungsdoppelbrechung des Objekts ab. Dadurch ist das Verfahren im Wesentlichen ein qualitatives Verfahren. Im Gegensatz zum einfachen Polarisationskontrastverfahren ist DIC-Mikroskopie daher für spannungsdoppelbrechende Objekte ungeeignet.

Anders als bei Phasenkontrastverfahren ist die Beleuchtungsmethode bei DIC-Mikroskopie nicht grundsätzlich eingeschränkt. Das DIC erlaubt auch die Untersuchung von Proben mit einer Dicke von weit mehr als $\lambda/10$.

Nachteilig sowohl bei Phasenkontrastverfahren, als auch bei DIC ist die geringe Lichtausbeute von typischerweise wenigen Prozent der Helligkeit der Hellfeldabbildung. Hauptursache für die geringe Lichtausbeute ist die Notwendigkeit, polarisiertes Licht zu verwenden. DIC erfordert ferner eine spannungsdoppelbrechungsarme Optik im Strahlengang zwischen dem Porarisator in der Beleuchtung und dem Empfänger.

Unter dem Begriff "Foucaultsche Schneide" ist ein Verfahren bekannt, bei dem eine Schneide in der Bildebene angeordnet wird um optische Instrumente zu prüfen. Bei dem Verfahren sind Augenpupille und Schneide praktisch an derselben Stelle angeordnet.

WO 02/057832 A1 offenbart eine Anordnung mit einem Phasenfilter zur Erzeugung eines Hoffinan-Bilds mit verbessertem Fokus.

**Offenbarung der Erfindung**

Es ist Aufgabe der Erfindung, eine Vorrichtung der eingangs genannten Art zu schaffen, die einfach aufgebaut ist, eine hohe Lichtausbeute hat und leicht zu justieren ist.

Erfindungsgemäß wird die Aufgabe dadurch gelöst, dass

(e) das Bauelement zur Erzeugung einer Interferenz oder optischen Filterung in der Austrittspupille des Objektivs angeordnet ist, und

(f) das Bauelement zur Erzeugung einer Interferenz oder optischen Filterung von einem Amplitudenfilter mit einem Amplitudentransmissionsfaktor $F_{DIC}(x,y)$ gebildet ist, der der Formel genügt:

$$2 \cdot F_{DIC}(x,y) = F_+(x,y) \cdot e^{+iP_0} + F_-(x,y) = 2 \cdot T_0 \cdot \cos\left( P_{max}\left( -x \cdot \sin\varphi + y \cdot \cos\varphi \right) + \frac{P_0}{2} \right) \cdot e^{+i\frac{P_0}{2}}$$

wobei

x,y: Koordinaten in der Austrittspupillenebene

$F_{DIC}(x,y)$: Funktioneller Ausdruck zur Beschreibung der Amplitudenfiltertransmission und der Phase des Amplitudenfilters in Abhängigkeit von den Koordinaten x und y

t(x,y): variabler, reeller Teil des Amplitudentransmissionsfaktors des Amplitudenfilters mit

$$t(x,y) = T_0 \cdot \cos\left( P_{max}\left( -x \cdot \sin\varphi + y \cdot \cos\varphi \right) + \frac{P_0}{2} \right)$$

T(x,y): Transmissionsgrad des Amplitudenfilters. Bezeichnet $F^*_{DIC}(x,y)$ das konjugiert komplexe $F_{DIC}(x,y)$, dann

$$T(x,y) = F_{DIC}(x,y) \cdot F^*_{DIC}(x,y) = t^2(x,y)$$

F+(x,y): "positiver" Anteil von $F_{DIC}$, mit $F_+(x,y) = T_0 \cdot e^{+iP_{max} \cdot (-x \cdot \sin\varphi + y \cdot \cos\varphi)}$

$\varphi$: Richtungswinkel der Wirkung des DICs in der Austrittspupillenebene

P(x,y): Phasenverlauf des Amplitudenfilters mit

$$P(x,y) = \arg(F_{DIC}) = \begin{cases} \dfrac{P_0}{2} & -\pi \leq 2P_{max} \cdot (-x \cdot \sin\varphi + y \cdot \cos\varphi) + P_0 \leq \pi \\ \dfrac{P_0}{2} + \pi & \pi \leq 2P_{max} \cdot (-x \cdot \sin\varphi + y \cdot \cos\varphi) + P_0 \leq 3\pi \end{cases}$$

F-(x,y): "negativer" Anteil von $F_{DIC}$, mit

$$F_+(x,y) \cdot F_-(x,y) = T_0 \cdot e^{+iP_{max} \cdot (-x \cdot \sin\varphi + y \cdot \cos\varphi)} \cdot T_0 \cdot e^{-iP_{max} \cdot (-x \cdot \sin\varphi + y \cdot \cos\varphi)} = T_0^2$$

$P_0$: konstanter, reeller Phasenoffset des Amplitudenfilters $F_{DIC}(x,y)$

$T_0$: konstanter, reeller Amplitudentransmissionsfaktor von $F_{DIC}$, bzw. $F_+$ und F- mit $T_0$ ungleich 0

$P_{max}$: konstante, reelle Maximalphase von $F_+$ bzw. F-.

Der Phasenverlauf P(x,y) innerhalb der Austrittspupille ist eine Phasenstufe mit höchstens zwei relevanten Werten.

Mit der Erfindung können optische Abbildungsketten modifiziert werden, deren Aperturblende oder Pupille zwischen dem Objekt und dem Bild physisch zugänglich sind. Die Modifikation erfolgt durch ein zusätzliches Bauelement in der Austrittspupille des Objektivs. Dadurch treten im Bild des Objekts andernfalls unsichtbare Eigenschaften dieses Objekts hervor und können von einem Detektor registriert werden.

Das zusätzliche Bauelement ist erfindungsgemäß ein optischer Amplitudenfilter, der die gleichen optischen Wirkungen erzeugt, wie die Differentialinterferenzkontrast (DIC) - Mikroskopie. Dabei kann auf DIC-spezifische Bauteile vollständig verzichtet werden. Es ist kein polarisiertes Licht erforderlich. Die vorliegende Erfindung ist daher kein Polarisationskontrastverfahren. Die Anordnung ist polarisationsunempfindlich. Abbildungsoptik muss daher geringeren Anforderungen genügen, als bei bekannten DIC-Mikroskopen. Die Anordnung ist im Durchlicht weitgehend unabhängig von der Vergrößerung und bei einigen Ausführungsbeispielen sogar vollständig unabhängig von der Vergrößerung. Ein besonderer Vorteil der Erfindung ist es, dass der Amplitudenfilter leicht nachrüstbar und justierbar ist.

$F_{DIC}(x,y)$ ist ein funktioneller Ausdruck zur Beschreibung der Amplitudenfiltertransmission und der Phase des Amplitudenfilters in Abhängigkeit von den Koordinaten x und y. Der Verlauf des Transmissionsgrads des Amplitudenfilters in x-und y-Richtung wird durch den komplexen Betrag $F_{DIC}(x,y) \; F^*_{DIC}(x,y)$ beschrieben.

(p ist der Richtungswinkel der Wirkung des DICs in der Austrittspupillenebene. Er kann aber auch in gleichwertiger Weise den Richtungswinkel in der Bildebene angeben, wenn das durch x und y beschriebene Koordinatensystem in der Austrittspupille in die Bildebene übertragen wird.

P(x,y) repräsentiert den Phasenverlauf des Amplitudenfilters, d.h. den Verlauf des Effekts auf die Phase der auftreffenden Strahlung. Die Phase wird durch das komplexe Argument des Filters, P(x,y)=arg ($F_{DIC}$), beschrieben. Die praktische Realisierung einer solchen Phase kann durch Unterschiede $\Delta$d in der Dicke des Substrats des Amplitudenfilters erfolgen. Diese Unterschiede folgen folgender Formel:

$$(n-1)\cdot \Delta d(x,y) = \frac{P(x,y)}{2\pi}\cdot \lambda$$

wobei $\lambda$ die Wellenlänge des Lichts aus der Strahlungsquelle und n die Brechzahl des Filtersubstrats bei der Wellenlänge $\lambda$ sind. In einer alternativen Ausgestaltung der Erfindung wird der Phasenverlauf durch eine geeignete Beschichtung des Filtersubstrats hergestellt.

$P_0$ ist der Phasenoffset des Amplitudenfilters. Der Phasenoffset kann beliebig gewählt werden. Er fällt bei der Bilderzeugung heraus. Der Phasenoffset ermöglicht die Verwendung eines Amplitudenfilters mit einer gut handhabbaren Filtersubstratdicke.

$T_0$ gibt den Amplitudentransmissionsfaktor des Amplitudenfilters an. Er stellt einen konstanten Faktor dar, der von den Koordinaten x und y in der Austrittspupille unabhängig ist. Mit anderen Worten: $T_0$ repräsentiert die Grundtransmission des Filtersubstrats.

Die Verwendung eines Amplitudenfilters, dessen Eigenschaften im Wesentlichen der obigen Formel folgen, führt mit einigen nicht erfindungsgemäßen Näherungen zu Spezialfällen:

Der Amplitudenfilter kann von einem reinen Intensitätsfilter gebildet sein, der in jedem Punkt die gleiche Dicke hat, d.h. $\Delta d(x,y)=0$. Dabei wird kein Phasenverlauf und insbesondere keine Phasendifferenz erzeugt. Die Strahlung aus der Strahlungsquelle braucht nicht monochromatisch sein. Der Transmissionsgrad eines solchen Intensitätsfilters hat den der Formel $F_{DIC}(x,y)F^*_{DIC}(x,y)$ folgenden Verlauf. Der Phasenverlauf P(x,y) wird in allen Punkten (x,y) auf Null gesetzt. Gegenüber einem Amplitudenfilter mit Phasendifferenz wird das Bild überraschenderweise trotz der Näherung nur sehr wenig unschärfer.

Zur Erzeugung eines Amplitudentransmissionsverlaufs kann der Amplitudenfilter mit Aluminium oder einem anderen geeigneten, absorbierenden Material beschichtet sein. Dadurch wird der Verlauf der Intensität in geeigneter Weise beeinflusst. Alternativ wird eine Platte verwendet, die eine in Abhängigkeit von den Koordinaten x und y veränderliche, optische Dichte aufweist.

In einer weiteren Näherung wird ebenfalls keine Phasendifferenz erzeugt, d.h. der Phasenverlauf P(x,y) wird in allen Punkten (x,y) auf Null gesetzt. Vielmehr ist vorgesehen, dass der Amplitudenfilter eine in der Austrittspupille verlaufende Kante aufweist, welche auf der einen Seite keine Intensität durchlässt und die Strahlung in einem Teil der Austrittspupille blockiert und auf der anderen Seite im verbleibenden Teil der Austrittspupille die maximale Intensität durchlässt, d.h. der Transmissionsgrad T(x,y) wird in allen Punkten (x,y) auf Null gesetzt, für die T(x,y)≤S, wobei S ein Schwellwert ist mit $0 \le S \le T_0^2$. Vorzugsweise ist die Kante derart angeordnet, dass zumindest die Hälfte der Strahlung mit maximaler Intensität durchgelassen wird.

Bei einem alternativen Ausführungsbeispiel der Erfindung wird monochromatische Strahlung und eine Phasenstufe verwendet. Dabei kann eine der Phasen auf Null gesetzt werden.

Allen Ausführungsbeispielen der Erfindung ist gemeinsam, dass kein Polarisator und kein Nomarski-Prisma erforderlich ist. Dadurch ist die Lichtausbeute der optischen Anordnung erheblich höher, als im Vergleich zu bekannten Verfahren. Es ist auch nicht erforderlich, kohärentes Licht oder eine kleine Beleuchtungsapertur zu verwenden. Die Anordnung kann unabhängig von der Art der Lichtquelle und unabhängig von der Polarisation des Lichts eingesetzt werden.

Die Wirkungsweise des Amplitudenfilters in der Austrittspupille kann mit folgenden Überlegungen hergeleitet werden:

Theoretisch kann ein Differentialinterferenzkontrast (DIC) als Ergebnis zweier unabhängiger Amplitudenfilter auf die optische Übertragungsfunktion im Rahmen einer partiell kohärenten Abbildung im Mikroskop beschrieben werden. Der Differentialinterferenzkontrast entsteht im Bildraum aus zwei zueinander senkrecht polarisierten und daher unabhängigen Hellfeldbeleuchtungen. Die Strahlung unterscheidet sich voneinander durch ihre systematischen Phasengradienten in der Eintrittspupille des Mikroskopobjektivs. Beide Phasengradienten sind betragsgleich, "quasilinear" und von gleicher Richtung. Die Phasengradienten haben aber einen entgegengesetzten Richtungssinn, d.h. sie haben ein entgegengesetztes Vorzeichen. Die Richtung der Phasengradienten wird bei klassischer DIC durch die Richtung der beiden Keile des Nomarski-Prismas im Beleuchtungsstrahlengang vorgegeben.

Das erste Nomarski-Prisma liegt optisch im Bereich der Eintrittspupille des Mikroskopobjektivs, aber in der Abbildungskette vor dem Objekt. Durch das Nomarski-Prisma werden zwei polarisationsabhängig gegenläufigen Phasengradienten entlang der Keilrichtung des Nomarski-Prismas hervorgerufen.

Das zweite Nomarski-Prisma ist im Abbildungsstrahlengang physisch im Bereich der Austrittspupille des Mikroskopobjektivs angeordnet. Es liegt optisch am gleichen Ort, wie das erste Nomarski-Prisma, aber in der Abbildungskette hinter dem Objekt. Es ist aber so orientiert, dass es die beiden polarisationsabhängigen Phasengradienten des ersten Nomarski-Prismas kompensiert.

Die Köhlersche Beleuchtung erzeugt vom Standpunkt der partiell kohärenten Abbildung im Mikroskop eine fast vollständig inkohärente Ersatzlichtquelle in der Eintrittspupille des Mikroskopobjektivs, und diese Ersatzlichtquelle liegt in der Abbildungskette vor dem Objekt. Das in der Abbildungskette ebenfalls vor dem Objekt positionierte und in der Eintrittspupille liegende erste Nomarski-Prisma hat daher überhaupt keine abbildungsrelevante Wirkung. Es kann entfallen. Das zweite Nomarski-Prisma erzeugt die gegenläufigen Phasengradienten über der Austrittspupille. Jeder einzelnen Amplitudenverteilung jeder am Objekt gebeugten Welle die zu einem inkohärenten Punkt der Ersatzlichtquelle gehört wird einer der beiden gegenläufigen Phasengradienten aufgeprägt. Dies erfolgt polarisationsabhängig für jeden inkohärenten Beleuchtungsanteil automatisch. Es ist ausreichend, einen Polarisator in der Abbildungskette unmittelbar vor dem zweiten Nomarski-Prisma anzuordnen. Der Polarisator im Beleuchtungsstrahlengang ist nur für die Funktion des ersten Nomarski-Prismas von Bedeutung und kann mit diesem entfallen.

Ein vollständig transparenter Amplitudenfilter in der Austrittspupille des Mikroskopobjektivs, der ausschließlich aus einem quasilinearen Phasengradienten besteht, bewirkt einen lateralen Versatz des Mikroskopbildes. Dabei gilt:

$$\frac{P_{max}}{2\pi}\lambda = A \cdot \Delta z$$

wobei

$\Delta z$: lateraler Versatz des in die Objektebene zurückgerechneten Bildes in der Objektebene des Mikroskops in Richtung des Phasengradienten
A: Objektapertur des Mikroskops
$P_{max}$: betragsgrößte Phase des Phasengradienten am Rand der Austrittspupille des Mikroskops

Der erfindungsgemäße Amplitudenfilter lässt sich mittels zweier quasilinearer fiktiver Amplitudenfilter herleiten, die polarisationsabhängig die beiden gegenläufigen Phasengradienten +Pmax und -Pmax hervorrufen. Bei einem solchen Amplitudenfilter entfällt auch das zweite Nomarski-Prisma, sein Polarisator und sein Analysator im Abbildungsstrahlengang.

Die Polarisationsabhängigkeit der gegenläufigen Phasengradienten $\pm P_{max}$ der fiktiven Amplitudenfilter ist für den Differentialinterferenzkontrast-Effekt selbst aber unerheblich. Vorteilhafterweise sind dann mit polarisationsunabhängigen fiktiven Amplitudenfiltern auch die Polarisationseigenschaften des Objekts unerheblich. Die fiktiven Amplitudenfilter erlauben dann die Kombination mit herkömmlichen Polarisationskontrastverfahren.

Die mathematische Darstellung der fiktiven polarisationsunabhängigen Amplitudenfilter erfolgt mittels der fiktiven Amplitudentransmissionsfaktoren $F_+$ und F-, die die beiden gegenläufigen Phasengradienten repräsentieren, und für die in der oben angegebenen Notation gilt:

$$F_+(x,y) = T_0 \cdot e^{+iP_{max}\cdot(-x\cdot\sin\varphi + y\cdot\cos\varphi)}$$

Der Amplitudentransmissionsfaktor To ist reell und konstant über die Austrittspupille und liegt typischerweise zwischen 0 und 1. $\varphi$ ist die Orientierung des Phasengradienten in der Austrittspupille und nimmt einen Wert zwischen $-\pi$ und $+\pi$ an. $\varphi=0$ bedeutet "meridional positiv", also $+y$ im Koordinatensystem der Austrittspupille. $\varphi=-\pi/2$ bedeutet "sagittal positiv", also $+x$ im Koordinatensystem der Austrittspupille.

Der fiktive Amplitudentransmissionsfaktor $F_+$ wäre praktisch beispielsweise durch eine beschichtete Glasplatte in der Austrittspupille realisierbar. Die Glasplatte wäre eine Phasenplatte, deren Transmissionsgrad $F_+ F^*_+$ wäre und deren Dickenänderung $\Delta d_+$ in der oben angegebenen Notation folgenden Verlauf hätte:

$$(n-1)\cdot\Delta d_+(x,y) = \frac{+P_{max}}{2\pi}\cdot\lambda\cdot(-x\cdot\sin\varphi + y\cdot\cos\varphi) = +A\cdot\Delta z\cdot(-x\cdot\sin\varphi + y\cdot\cos\varphi)$$

Fügt man der durch diese Gleichung beschriebenen Phasenplatte eine gegenläufige Phasenplatte in der Austrittspupille hinzu, so ist der gesamte Effekt des Amplitudenfilters:

$$F_+(x,y)\cdot F_-(x,y) = T_0\cdot e^{+iP_{max}\cdot(-x\cdot\sin\varphi + y\cdot\cos\varphi)}\cdot T_0\cdot e^{-iP_{max}\cdot(-x\cdot\sin\varphi + y\cdot\cos\varphi)} = T_0^2$$

Mit anderen Worten: ein paarweiser, entgegengesetzter Versatz tritt nicht ein. Es tritt überhaupt kein lateraler Versatz auf, da das Licht den Hälften der Phasenplatte nicht zugeordnet ist.

Der anspruchsgemäße, technisch realisierbare Amplitudenfilter mit der Eigenschaft

$$2\cdot F_{DIC}(x,y) = F_+(x,y)\cdot e^{+iP_0} + F_-(x,y) = 2\cdot T_0\cdot\cos\left(P_{max}(-x\cdot\sin\varphi + y\cdot\cos\varphi) + \frac{P_0}{2}\right)\cdot e^{+i\frac{P_0}{2}}$$

trennt das Licht in zwei Anteile und erzeugt so den gewünschten, paarweisen, lateralen Versatz, der für die Erzeugung eines Differentialinterferenzkontrastes erforderlich ist. Entscheidend ist, dass der Effekt des zusammengesetzten Amplitudenfilters $F_{DIC}(x,y)$ einen summarischen Verlauf des Amplitudentransmissionsfaktors mit einem summarischen Verlauf der Phase hat. Die kombinierte Wirkung des fiktiven Amplitudenfilterpaares $F_+$, $F_-$ kann damit in einen technisch realisierbaren Intensitätsfilter und eine ebenfalls technisch realisierbare Phasenplatte aufgeteilt werden, indem der Amplitudenfilter als das komplexe Produkt eines Transmissionsgrades $T(x,y)$ und einer Phase $P(x,y)$ ausgedrückt wird. $T(x,y)$ und $P(x,y)$ müssen aber die Wirkung von $F_{DIC}(x,y)$ auf die komplexen Lichtamplituden herbeiführen, und das kann auf eineindeutige Weise nur erreicht werden, indem ein gegebenenfalls negativer Amplitudentransmissionsfaktor

$$F_{DIC}(x,z) = t(x,z)\cdot e^{i\frac{P_0}{2}}$$ an der Stelle (x,y) durch einen nicht-negativen Amplitudentransmissionsfaktor

$$F_{DIC}(x,z) = \sqrt{T(x,z)}\cdot e^{iP(x,z)}$$ ersetzt wird und die Phase $P_0/2$ eine Zusatzphase $\pi$ mit $P(x,y)=P_0/2+\pi$ erhält; der Amplitudentransmissionsfaktor kann so eineindeutig in Form einer optischen Dichte ausgedrückt werden. Die gegebenenfalls modifizierte Phase $P(x,y)$ kann wieder durch eine Variation der Glasplattendicke des Filtersubstrats ausgedrückt werden.

Für den Verlauf des Transmissionsgrads $I_T(x,y)$ des Amplitudenfilters $F_{DIC}(x,y)$ kann jede Verteilung $I_T(x,y)=I_0\cdot T(x,y)$ verwendet werden, wobei $0<I_0$ einen beliebigen Normierungsfaktor darstellt. Für die Phasenplatte, die die gegebenenfalls modifizierte Phase $P(x,y)$ repräsentiert, gilt $e^{iP(x,y)} = \dfrac{F_{DIC}}{\sqrt{T(x,y)}}$.

Die beschriebene Anordnung unterscheidet sich von der Foucaultschen Schneide. Die Foucaultsche Schneide befindet sich in der Bildebene oder in einer Zwischenbildebene eines Objektivs. Die DIC-Schneide befindet sich dagegen in der Austrittspupille oder in einer Pupille eines Objektivs. Mit der Foucaultsche Schneide wird idealerweise ein Punktobjekt verwendet. Die Objektausdehnung soll jedenfalls von der Größenordnung einer Airy Disk ($1.22\cdot\lambda/A$) sein. Die DIC-Schneide ist nur bei Anwendung auf ausgedehnte Objekte sinnvoll, für Punktobjekte ist sie nutzlos. Die Foucaultsche Schneide wird auf Intensitätsobjekte angewendet, für Phasenobjekte ist sie wertlos. Die DIC-Schneide ist bei reinen Phasenobjekten besonders vorteilhaft.

Ausgestaltungen der Erfindung sind Gegenstand der Unteransprüche. Ein Ausführungsbeispiel ist nachstehend unter Bezugnahme auf die beigefügten Zeichnungen näher erläutert.

Kurze Beschreibung der Zeichnungen

Fig.1 ist eine schematische Darstellung der Komponenten eines Durchlicht-Mikroskops zur Erzeugung eines Differentialinterferenzkontrast-Bildes.

Fig.2 zeigt schematisch den Strahlengang in einer Anordnung aus Figur 1.

Fig.3 ist eine schematische Darstellung der Komponenten und des Strahlengangs in einem Auflicht-Mikroskop zur Erzeugung eines Differentialinterferenzkontrast-Bildes analog zu Figur 1.

Fig.4a-d zeigen Eigenschaften eines Beispiels für einen Amplitudenfilter

Fig.5 ist ein Bild eines reinen Phasenobjekts erzeugt mit dem Amplitudenfilter aus Figur 4.

Fig.6 ist ein Profilschnitt durch einen Amplitudenfilter und zeigt den Realteil von $F_{DIC}$ entsprechend Figur 4a.

Fig.7 ist ein Profilschnitt durch einen Amplitudenfilter und zeigt den Imaginärteil von $F_{DIC}$ entsprechend Figur 4b.

Fig.8 ist ein Profilschnitt durch einen Amplitudenfilter und zeigt die Phase/$2\pi$ von $F_{DIC}$ entsprechend Figur 4c.

Fig.9 ist ein Profilschnitt durch einen Amplitudenfilter und zeigt den Transmissionsgrad als Betragsquadrat ($F_{DIC}{}^*F_{DIC}$)

**Beschreibung des Ausführungsbeispiels**

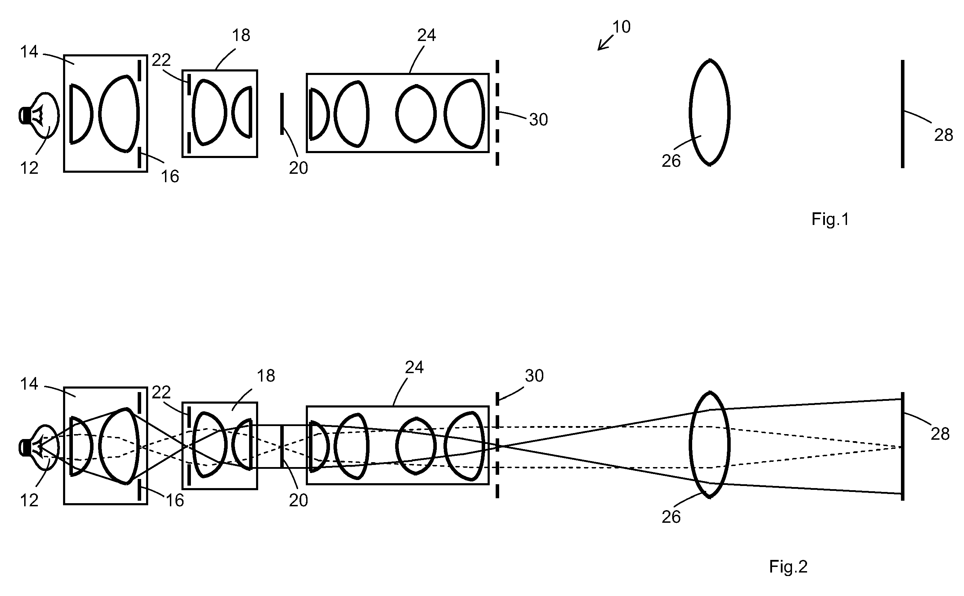

Figur 1 zeigt ein allgemein mit 10 bezeichnetes Durchlicht-Mikroskop zur Erzeugung eines Differentialinterferenzkontrast-Bildes. Das Mikroskop 10 weist eine Lampe 12 als Strahlungsquelle auf. Vor der Lampe 12 ist ein Kollektor 14 mit einer Linsenanordnung und einer Leuchtfeldblende 16 in der Leuchtfeldblendenebene angeordnet. Die Beleuchtungsanordnung des Mikroskops 10 weist ferner einen Kondensor 18 mit einer Linsenanordnung und einer Beleuchtungsaperturblende 22 auf. Kollektor 14 und Kondensor 18 sind derart angeordnet, dass das Objekt 20 in der Objektebene mit einer Köhlerschen Beleuchtung beleuchtet wird. Dabei wird die Leuchtfeldblendenebene mit dem Kondensor 18 in die Objektebene abgebildet. Dies ist anhand des Strahlengangs in Figur 2 gut zu erkennen. Die Objektebene wird auf diese Weise auch mit ungleichmäßig strahlender Lichtquelle gleichmäßig beleuchtet.

Das in der Objektebene befindliche Objekt 20 wird auf übliche Weise mittels eines Objektivs 24 mit einer geeigneten Objektivlinsenanordnung und einer Tubuslinse 26 in die Bildebene 28 abgebildet. Wie in Figur 2 zu erkennen ist, ist die optische Anordnung derart ausgebildet, dass die Beleuchtungsaperturebene 22 in die Austrittspupillenebene 30 des Objektivs 24 abgebildet wird.

Die beschriebene Anordnung ist soweit bekannt und entspricht herkömmlichen Mikroskop-Anordnungen. In der Austrittspupillenebene ist aber, anders als bei bekannten Mikroskopen, ein Amplitudenfilter angeordnet. Der Amplitudenfilter ist im Wesentlichen eine dünne Glasplatte mit veränderlicher Dicke. Die Glasplatte ist mit Aluminium beschichtet. Die Aluminiumschicht ist nicht gleichmäßig aufgebracht. Dadurch wird ein der Schichtdicke entsprechender Intensitätstransmissionsverlauf erzeugt.

Die Glasplatte in der Austrittspupillenebene 30 erfüllt folgende Bedingung:

$$2 \cdot F_{DIC}(x, y) = F_{+}(x, y) \cdot e^{+iP_0} + F_{-}(x, y) = 2 \cdot T_0 \cdot \cos\left( P_{max}(-x \cdot \sin\varphi + y \cdot \cos\varphi) + \frac{P_0}{2} \right) \cdot e^{+i\frac{P_0}{2}}$$

wobei

x,y: Koordinaten in der Austrittspupillenebene

$F_{DIC}(x,y)$:    Funktioneller Ausdruck zur Beschreibung der Amplitudenfiltertransmission und der Phase des Amplitudenfilters in Abhängigkeit von den Koordinaten x und y

$t(x,y)$:    variabler, reeller Teil des Amplitudentransmissionsfaktors des Amplitudenfilters mit

$$t(x,y) = T_0 \cdot \cos\left( P_{max}\left( -x \cdot \sin\varphi + y \cdot \cos\varphi \right) + \frac{P_0}{2} \right)$$

$T(x,y)$:    Transmissionsgrad des Amplitudenfilters. Bezeichnet $F^*_{DIC}(x,y)$ das konjugiert komplexe $F_{DIC}(x,y)$, dann gilt

$$T(x,y) = F_{DIC}(x,y) \cdot F^*_{DIC}(x,y) = t^2(x,y)$$

$F+(x,y)$:    "positiver" Anteil von $F_{DIC}$, mit $F_+(x,y) = T_0 \cdot e^{+iP_{max}\cdot(-x\cdot\sin\varphi+y\cdot\cos\varphi)}$

$\varphi$:    Richtungswinkel der Wirkung des DICs in der Austrittspupillenebene

$P(x,y)$:    Phasenverlauf des Amplitudenfilters. Der Phasenverlauf innerhalb der Austrittspupille ist eine Phasenstufe mit höchstens zwei relevanten Werten

$$P(x,y) = \arg(F_{DIC}) = \begin{cases} \dfrac{P_0}{2} & -\pi \leq 2P_{max} \cdot \left( -x \cdot \sin\varphi + y \cdot \cos\varphi \right) + P_0 \leq \pi \\[2mm] \dfrac{P_0}{2} + \pi & \pi \leq 2P_{max} \cdot \left( -x \cdot \sin\varphi + y \cdot \cos\varphi \right) + P_0 \leq 3\pi \end{cases}$$

$F_-(x,y)$:    "negativer" Anteil von $F_{DIC}$, mit

$$F_+(x,y) \cdot F_-(x,y) = T_0 \cdot e^{+iP_{max}\cdot(-x\cdot\sin\varphi+y\cdot\cos\varphi)} \cdot T_0 \cdot e^{-iP_{max}\cdot(-x\cdot\sin\varphi+y\cdot\cos\varphi)} = T_0^2$$

$P_0$:    konstanter, reeller Phasenoffset des Amplitudenfilters $F_{DIC}(x,y)$

$T_0$:    konstanter, reeller Amplitudentransmissionsfaktor von $F_{DIC}$, bzw. $F_+$ und F- mit To ungleich 0

$P_{max}$:    konstante, reelle Maximalphase von $F_+$ bzw. $F_-$

Die Dicke der Glasplatte hat einen Verlauf, dessen Änderung $\Delta d$ gegenüber einer Basisdicke entspricht:

$$\Delta d(x,y) = \frac{\lambda}{2\pi \cdot (n-1)} \cdot \arg\left( \frac{F_{DIC}(x,y)}{\sqrt{T(x,y)}} \right)$$

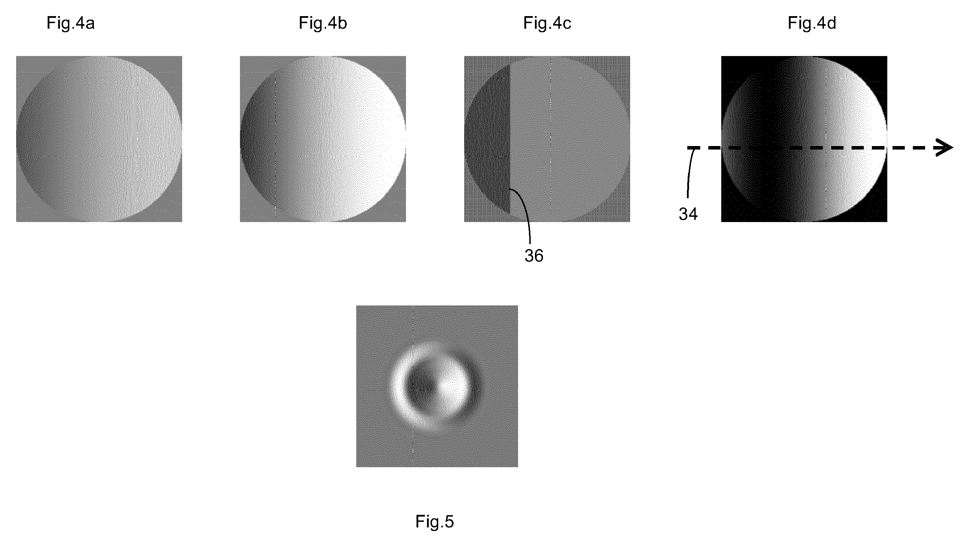

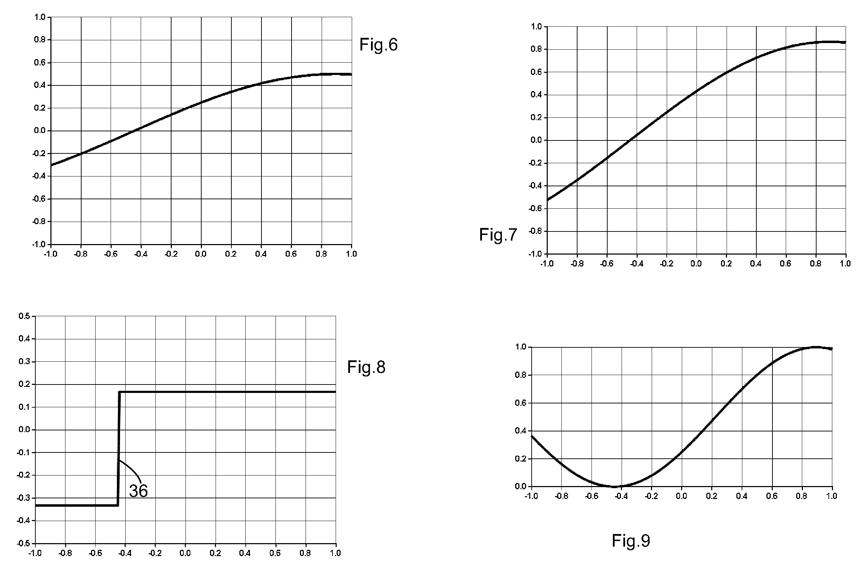

Dadurch wird eine Phase erzeugt, die beispielhaft in Figur 4c dargestellt ist. Ein Profilschnitt der Phase entlang einer Schnittlinie 34 (Fig.4d) ist in Figur 8 gezeigt. Man erkennt, dass sich die Dicke der Glasplatte bei 36 sprunghaft ändert.

Figur 4a zeigt den Realteil obiger Amplitudenfunktion $F_{DIC}$ und Fig.4b zeigt den Imaginärteil. Die zugehörigen Profilschnitte sind in den Figuren 6 und 7 gezeigt. Der aus diesen Verläufen resultierende Transmissionsgrad T(x,y) ist in Figur 4d und Figur 9 dargestellt. Der Verlauf der Intensitätstransmission wird mit der Aluminiumbeschichtung verwirklich.

Der Amplitudenfilter, der eine solche Formgebung zur Erzeugung eines ortsabhängigen Phasengradienten und eine solche Beschichtung zur Erzeugung einer ortsabhängigen Intensitätstransmission hat, kann ein Differentialinterferenzkontrastbild erzeugen. Ein Beispiel für ein solches Bild eines Phasenobjekts ist in Figur 5 beispielhaft dargestellt.

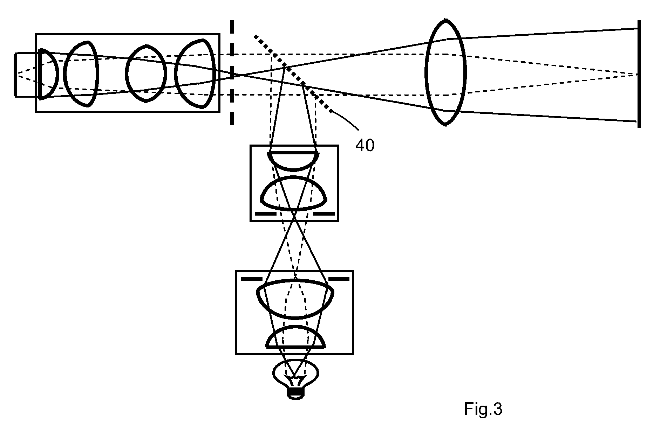

Statt eines Durchlicht-Mikroskops ist es auch möglich, ein Auflicht-Mikroskop zu verwenden, wie es in Figur 3 schematisch dargestellt ist. Auch hier ist der Amplitudenfilter in der Austrittspupillenebene des Objektivs angeordnet. Die Einkopplung der Beleuchtung von der Seite erfolgt mittels eines halbdurchlässigen Spiegels 40 im Strahlengang zwischen Objektiv und Tubuslinse.

Die Erfindung kann mit einem integrierten Amplitudenfilter verwirklicht werden, bei dem das Intensitätstransmissionsprofil und die Phasenänderung in einer Glasplatte verwirklicht werden. Es kann aber auch ein Filter mit dem Intensitätstransmissionsprofil und eine gesonderte Phasenplatte eingesetzt werden.

Es hat sich herausgestellt, dass auch dann sehr gute Abbildungsergebnisse und ein DICtypisches Aussehen des Bildes erreicht werden, wenn nur eine Phasenplatte oder nur ein Filter mit dem Transmissionsprofil eingesetzt werden. Diese Komponenten erzeugen einen Versatz zwischen zwei Bildern auch dann, wenn sie alleine eingesetzt werden. Die Phasenformel verwendet in diesem Fall eines der beiden fiktiven Filter, z.B. F+, und lautet dann P(x, y)=±abs(arg(F$_+$))+Offset und T(x,y)=const, wobei eines der beiden Vorzeichen "±" gewählt wird. Der Offset, P$_{max}$ und die Drehung um die optische Achse bestimmen das Aussehen des Bildes. Der Offset kann einfach variiert werden, indem das Filter lateral zur optischen Achse verschoben wird. Der Verlauf von P(x,y) muss nicht linear sein, entscheidend ist das "±abs", also die Existenz eines Minimums oder eines Maximums innerhalb der Austrittspupille, je nach gewähltem Vorzeichen.

**Patentansprüche**

1. Vorrichtung zur Erzeugung eines Differentialinterferenzkontrastbildes (DIC) eines Objekts in einer Bildebene, enthaltend:

    (a) eine Strahlungsquelle;
    (b) eine Köhlersche Beleuchtungoptik zur Beleuchtung des Objekts mit Licht aus der Strahlungsquelle;
    (c) ein Objektiv zur Abbildung der Objektebene in eine Bildebene, wobei das Objektiv eine Austrittspupille und eine Eintrittspupille aufweist, und wobei die Eintrittspupille des Objektivs in der Beleuchtungspupille der Köhlerschen Beleuchtungsoptik liegt; und
    (d) ein Bauelement zur Erzeugung einer Interferenz oder optische Filterung, **dadurch gekennzeichnet, dass**
    (e) das Bauelement zur Erzeugung einer Interferenz oder optischen Filterung in der Austrittspupille des Objektivs angeordnet ist, und
    (f) das Bauelement zur Erzeugung einer Interferenz oder optischen Filterung von einem Amplitudenfilter mit einem Amplitudentransmissionsfaktor F$_{DIC}$(x,y) gebildet ist, der der Formel genügt:

$$2 \cdot F_{DIC}(x,y) = F_+(x,y) \cdot e^{+iP_0} + F_-(x,y) = 2 \cdot T_0 \cdot \cos\left(P_{max}(-x \cdot \sin\varphi + y \cdot \cos\varphi) + \frac{P_0}{2}\right) \cdot e^{+i\frac{P_0}{2}}$$

wobei

x,y: Koordinaten in der Austrittspupillenebene
F$_{DIC}$(x,y): Funktioneller Ausdruck zur Beschreibung der Amplitudenfiltertransmission und der Phase des Amplitudenfilters in Abhängigkeit von den Koordinaten x und y
t(x,y): variabler, reeller Teil des Amplitudentransmissionsfaktors des Amplitudenfilters mit

$$t(x,y) = T_0 \cdot \cos\left(P_{max}(-x \cdot \sin\varphi + y \cdot \cos\varphi) + \frac{P_0}{2}\right)$$

T(x,y): Transmissionsgrad des Amplitudenfilters. Bezeichnet F*$_{DIC}$(x,y) das konjugiert komplexe F$_{DIC}$(x,y), dann

$$T(x,y) = F_{DIC}(x,y) \cdot F_{DIC}^*(x,y) = t^2(x,y)$$

F$_+$(x,y): "positiver" Anteil von F$_{DIC}$, mit $F_+(x,y) = T_0 \cdot e^{+iP_{max} \cdot (-x \cdot \sin\varphi + y \cdot \cos\varphi)}$
$\varphi$: Richtungswinkel der Wirkung des DICs in der Austrittspupillenebene
P(x,y): Phasenverlauf des Amplitudenfilters mit

$$P(x,y) = \arg(F_{DIC}) = \begin{cases} \dfrac{P_0}{2} & -\pi \leq 2P_{max} \cdot (-x \cdot \sin\varphi + y \cdot \cos\varphi) + P_0 \leq \pi \\ \dfrac{P_0}{2} + \pi & \pi \leq 2P_{max} \cdot (-x \cdot \sin\varphi + y \cdot \cos\varphi) + P_0 \leq 3\pi \end{cases}$$

F-(x,y): "negativer" Anteil von F$_{DIC}$, mit

$$F_+(x,y) \cdot F_-(x,y) = T_0 \cdot e^{+iP_{max}\cdot(-x\cdot\sin\varphi + y\cdot\cos\varphi)} \cdot T_0 \cdot e^{-iP_{max}\cdot(-x\cdot\sin\varphi + y\cdot\cos\varphi)} = T_0^2$$

Po: konstanter, reeller Phasenoffset des Amplitudenfilters $F_{DIC}(x,y)$
To: konstanter, reeller Amplitudentransmissionsfaktor von $F_{DIC}$, bzw. F+ und F- mit To ungleich 0
$P_{max}$: konstante, reelle Maximalphase von F+ bzw. F-

2. Vorrichtung nach Anspruch 1, **dadurch gekennzeichnet, dass** der Amplitudenfilter von einem reinen Intensitätsfilter gebildet ist, der in jedem Punkt die gleiche Substratdicke hat.

3. Vorrichtung nach einem der vorgehenden Ansprüche, **dadurch gekennzeichnet, dass** der Amplitudenfilter zur Erzeugung eines Amplitudentransmissionsverlaufs mit Aluminium oder einem anderen geeigneten, absorbierenden Material beschichtet ist.

**Claims**

1. Device for the generation of a differential interference contrast image (DIC) of an object in an imaging plane, comprising

   (a) a radiation source;
   (b) a Köhler illuminating optical assembly for illuminating the object with light from the radiation source;
   (c) an objective for imaging the object plane in an imaging plane, wherein the objective is provided with an exit pupil and an entrance pupil, and wherein the entrance pupil of the objective is positioned in the illuminating pupil of the Köhler illuminating optical assembly; and
   (d) a component for the generation of an interference

   **characterized in that**

   (e) the component for the generation of an interference is positioned in the exit pupil of the objective, and
   (f) the component for the generation of an interference is formed by an amplitude filter with an amplitude transmission factor $F_{DIC}(x,y)$, which comlies with the equation:

$$2 \cdot F_{DIC}(x,y) = F_+(x,y) \cdot e^{+iP_0} + F_-(x,y) = 2 \cdot T_0 \cdot \cos\left(P_{max}(-x\cdot\sin\varphi + y\cdot\cos\varphi) + \frac{P_0}{2}\right) \cdot e^{+i\frac{P_0}{2}}$$

   wherein

   x,y: coordinates in the exit pupil plane
   $F_{DIC}(x,y)$: functional expression for describing the amplitude filter transmission and the phase of the amplitude filter as a function of x and y
   t(x,y): variable, real portion of the amplitude transmission factor of the amplitude filter with

$$t(x,y) = T_0 \cdot \cos\left(P_{max}(-x\cdot\sin\varphi + y\cdot\cos\varphi) + \frac{P_0}{2}\right)$$

   T(x,y): Transmission degree of the amplitude filter. If $F^*_{DIC}(x,y)$ designates the conjugate-complex of $F_{DIC}(x,y)$, then

$$T(x,y) = F_{DIC}(x,y) \cdot F^*_{DIC}(x,y) = t^2(x,y)$$

   F+(x,y): "positive" portion of $F_{DIC}$, with $F_+(x,y) = T_0 \cdot e^{+iP_{max}\cdot(-x\cdot\sin\varphi + y\cdot\cos\varphi)}$
   $\varphi$: azimuth direction angle of the effect of the DIC in the exit pupil plane
   P(x,y): phase distribution of the amplitude filter with

$$P(x, y) = \arg(F_{DIC}) = \begin{cases} \dfrac{P_0}{2} & -\pi \le 2P_{max} \cdot (-x\cdot\sin\varphi + y\cdot\cos\varphi) + P_0 \le \pi \\ \dfrac{P_0}{2} + \pi & \pi \le 2P_{max} \cdot (-x\cdot\sin\varphi + y\cdot\cos\varphi) + P_0 \le 3\pi \end{cases}$$

F-(x,y): "negative" portion of $F_{DIC}$, with

$$F_+(x, y) \cdot F_-(x, y) = T_0 \cdot e^{+iP_{max}\cdot(-x\cdot\sin\varphi + y\cdot\cos\varphi)} \cdot T_0 \cdot e^{-iP_{max}\cdot(-x\cdot\sin\varphi + y\cdot\cos\varphi)} = T_0^2$$

Po: constant, real phase offset of the amplitude filter $F_{DIC}(x,y)$

To: constant, real amplitude transmission factor of $F_{DIC}$, or F+ and F-, resp. with To unequal to 0

$P_{max}$: constant, real maximum phase of F+ or F-, resp

2. Device according to claim 1, **characterized in that** the amplitude filter is an intensity filter which has the same substrate thickness in every point.

3. Device according to any of the preceding claims, **characterized in that** the amplitude filter for the generation of an amplitude transmission distribution is coated with aluminium or any other suitable absorbing material.

## Revendications

1. Dispositif destiné à générer une image de contraste interférentiel différentiel (CID) d'un objet dans un plan d'image, comprenant :

(a) une source de rayonnement ;

(b) un dispositif d'éclairage de Köhler destiné à éclairer l'objet avec de la lumière émanant de la source de rayonnement ;

(c) un objectif destiné à reproduire le plan d'objet dans un plan d'image, l'objectif présentant une pupille de sortie et une pupille d'entrée, et la pupille d'entrée de l'objectif se trouvant dans la pupille d'éclairage du dispositif d'éclairage de Köhler ; et

(d) un composant destiné à générer une interférence ou un filtrage optique, **caractérisé en ce que**

(e) le composant destiné à générer une interférence ou un filtrage optique est disposé dans la pupille de sortie de l'objectif, et

(f) le composant destiné à générer une interférence ou un filtrage optique est formé d'un filtre d'amplitude présentant un facteur de transmission d'amplitude $F_{DIC}(x,y)$ correspondant à la formule :

$$2 \cdot F_{DIC}(x, y) = F_+(x, y) \cdot e^{+iP_0} + F_-(x, y) = 2 \cdot T_0 \cdot \cos\left( P_{max}(-x\cdot\sin\varphi + y\cdot\cos\varphi) + \frac{P_0}{2} \right) \cdot e^{+i\frac{P_0}{2}}$$

où

x,y : coordonnées dans le plan de la pupille de sortie

$F_{DIC}(x,y)$ : expression fonctionnelle destinée à décrire la transmission de filtre d'amplitude et la phase du filtre d'amplitude en fonction des coordonnées x et y

t(x,y) : élément réel variable du facteur de transmission d'amplitude du filtre d'amplitude pour lequel on a

$$t(x, y) = T_0 \cdot \cos\left( P_{max}(-x\cdot\sin\varphi + y\cdot\cos\varphi) + \frac{P_0}{2} \right)$$

T(x,y) : degré de transmission du filtre d'amplitude. Si $F^*_{DIC}(x,y)$ désigne $F_{DIC}(x,y)$ de conjugaison complexe,

on a

$$T(x, y) = F_{DIC}(x, y) \cdot F_{DIC}^{*}(x, y) = t^2(x, y)$$

$F_+$(x,y) : part "positive" de $F_{DIC}$ pour laquelle on a $F_+(x,y)=T_0.e^{+iP_{max}\cdot(-x\cdot\sin\varphi+y\cos\varphi)}$
$\varphi$ : angle de direction de l'effet du CID dans le plan de la pupille de sortie
P(x,y) : tracé des phases du filtre d'amplitude pour lequel on a

$$P(x, y) = \arg(F_{DIC}) = \begin{cases} \dfrac{P_0}{2} & -\pi \leq 2P_{max} \cdot (-x \cdot \sin\varphi + y \cdot \cos\varphi) + P_0 \leq \pi \\ \dfrac{P_0}{2} + \pi & \pi \leq 2P_{max} \cdot (-x \cdot \sin\varphi + y \cdot \cos\varphi) + P_0 \leq 3\pi \end{cases}$$

F-(x,y) : part "négative" de $F_{DIC}$ pour laquelle on a

$$F_+(x, y) \cdot F_-(x, y) = T_0 \cdot e^{+iP_{max} \cdot (-x \cdot \sin\varphi + y \cdot \cos\varphi)} \cdot T_0 \cdot e^{-iP_{max} \cdot (-x \cdot \sin\varphi + y \cdot \cos\varphi)} = T_0^2$$

Po : écart de phases réel constant du filtre d'amplitude $F_{DIC}$(x,y)
To : facteur de transmission d'amplitude réel constant de $F_{DIC}$ ainsi que F+ et F- respectivement, To n'étant pas égal à 0
$P_{max}$ : phase maximale réelle constante de F+ et F- respectivement

2. Dispositif selon la revendication 1, **caractérisé en ce que** le filtre d'amplitude est formé d'un filtre d'intensité pure qui possède en chaque point la même épaisseur de substrat.

3. Dispositif selon l'une quelconque des revendications précédentes, **caractérisé en ce que** le filtre d'amplitude destiné à la génération d'un tracé de transmission d'amplitude est recouvert d'aluminium ou d'un autre matériau absorbant approprié.

Fig.1

Fig.2

Fig.3

40

Fig.4a  Fig.4b  Fig.4c  Fig.4d  Fig.5

16

Fig.6

Fig.7

Fig.8

36

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02057832 A1

**In der Beschreibung aufgeführte Nicht-Patentliteratur**

- *Fundamental Concepts in DIC Microscopy, http://www.olympusmicro.com/primer/techniques/dic/dicintro.html*
- *Wavefront Shear in Wollaston and Nomarski Prisms, http://www.olympusmicro.com/primer/java/dic/wollastonwavefronts/index.html*

- **R.DANZ et al.** PlasDIC - a useful modification of the differential interference contrast. *Photonic,* 2004, vol. 36 (1), 42-45